# EUROPÄISCHE PATENTSCHRIFT

(11) **EP 3 552 301 B1**
(45) Veröffentlichungstag und Bekanntmachung des Hinweises auf die Patenterteilung: **24.07.2024**
(21) Anmeldenummer: 17828661.3
(22) Anmeldetag: 05.12.2017
(51) Int. Cl.: H02K 1/276, H02K 15/03, H02K 21/14, H02K 1/02

(54) **VERFAHREN ZUR HERSTELLUNG EINES ROTORS FÜR EINE SYNCHRONRELUKTANZMASCHINE SOWIE ROTOR FÜR EINE SYNCHRONRELUKTANZMASCHINE**
METHOD FOR MANUFACTURING A ROTOR FOR A SYNCHRONOUS RELUCTANCE MACHINE AND ROTOR FOR A SYNCHRONOUS RELUCTANCE MACHINE
PROCÉDÉ DE FABRICATION D'UN ROTOR POUR UNE MACHINE ÉLECTRIQUE SYNCHRONE ET UN ROTOR POUR UNE MACHINE ÉLECTRIQUE SYNCHRONE

(30) Priorität: 06.12.2016 DE 102016224249
(43) Veröffentlichungstag der Anmeldung: 16.10.2019
(73) Patentinhaber: KSB SE & Co. KGaA, 67227 Frankenthal (DE)
(72) Erfinder: KOENEN, Michael, 67227 Frankenthal (DE); JANJIC, Boris, 67227 Frankenthal (DE); SCHAAB, Jochen, 67227 Frankenthal (DE)
(86) Internationale Anmeldenummer: PCT/EP2017/081453
(87) Internationale Veröffentlichungsnummer: WO 2018/104269

(56) Entgegenhaltungen:
- DE-A1- 102007 060 011
- DE-A1- 102011 089 488
- DE-A1- 102014 211 113
- JP-A- 2001 238 418

## Beschreibung

Die Erfindung betrifft ein Verfahren zur Herstellung eines Rotors für eine Synchron-reluktanzmaschine.

Ein Rotor für eine Synchronreluktanzmaschine wird üblicherweise aus einem weichmagnetischen Material gefertigt, indem einzelne elektromagnetische Bleche mit entsprechender Blechschnittgeometrie in Axialrichtung aufeinander gestapelt werden. Zur Ausbildung mindestens eines Polpaares bzw. Lückenpaares umfasst das weichmagnetische Element Flussleit- sowie Flusssperrabschnitte, die sich durch unterschiedlich stark ausgeprägte magnetische Permeabilität voneinander unterscheiden. Der Abschnitt mit großer magnetischer Leitfähigkeit wird als d-Achse, der Abschnitt mit vergleichsweise geringer Leitfähigkeit als q-Achse des Rotors gekennzeichnet. Durch Optimierung des Permeabilitätsverhältnisses zwischen d- und q-Achse kann der Wirkungsgrad des Synchronreluktanzmotors und damit die erzielbare Drehmomentausbeute gesteigert werden.

Flusssperren werden durch Materialaussparungen der einzelnen Blechschnitte des Rotorpakets verwirklicht. Insbesondere werden in q-Richtung pro Pol mehrere Aussparungen vorgesehen, wodurch die magnetische Leitfähigkeit sinkt und der magnetische Fluss in q-Richtung gehemmt wird. In der Regel sind die Flusssperren mit Luft gefüllt.

Eine effiziente Blechschnittgeometrie ist beispielsweise aus der US 5,818,140 bekannt, auf die an dieser Stelle vollumfänglich Bezug genommen wird. Zur weiteren Optimierung des Verhältnisses zwischen d- und q-Achse ist es ebenfalls bekannt, die Aussparungen bzw. Flusssperren zusätzlich mit Permanentmagneten zu bestücken, die aufgrund ihrer magnetischen Sättigung eine bessere Hemmung des magnetischen Flusses in q-Richtung ermöglichen. Insbesondere ist das Einbringen von gesinterten Magneten in diesem Zusammenhang bekannt. Dies verlangt jedoch nach einer speziellen Blechschnittgeometrie.

Die DE 10 2014 2111113 A1 offenbart einen Rotor oder Stator für eine elektrische Maschine, insbesondere eines elektrisch kommutierten Elektromotors, mit einem Dauermagneten. Bei Herstellung des Rotors wird der Dauermagnet mit einem Kunststoffmaterial umspritzt.

Die DE 10 2007 060011 A1 zeigt ein Sekundärteil einer permanenterregten elektrischen Maschine und ein Verfahren zu dessen Herstellung.

Der Rotor der DE 10 2011 089 488 A1 weist durch thermoplastisches Material fixierte Magnete auf.

Die JP 2001 238418 A offenbart einen Reluktanzmotor für eine Hochgeschwindigkeitsmaschine oder eine große rotierende Maschine.

Gesucht wird daher nach einer vereinfachten Lösung für die Herstellung eines gattungsgemäßen Rotors für eine Synchronreluktanzmaschine, in dessen Aussparungen bzw. Flusssperren Permanentmagnete eingebracht werden.

Gelöst wird diese Aufgabe durch das Verfahren gemäß den Merkmalen des Anspruchs 1. Vorteilhafte Ausgestaltungen des Verfahrens sind Gegenstand der abhängigen Ansprüche.

Erfindungsgemäß wird hierbei vorgeschlagen, zunächst ein Rotorpaket aus einer Vielzahl an Blechschnitten in Axialrichtung zu stapeln. Einzelne Blechschnitte sind mit Aussparungen zur Ausbildung von Flusssperren versehen. In einem nachfolgenden Schritt wird zumindest in ein Teil der Flusssperren des Rotorpaketes ein Magnetpartikel bzw. Magnetteilchen enthaltenes Kunststoffmaterial eingespritzt. Durch das Einspritzen kann eine einfache und unkomplizierte Einbringung der Magnete erreicht werden. Zudem erfordert dieser Verfahrensschritt keine spezielle Blechschnittgeometrie bzw. besondere Ausgestaltung der Flusssperren. Vielmehr ist das Verfahren für jede erdenkliche Blechschnittgeometrie eines Rotors für eine Synchronreluktanzmaschine anwendbar. Das sich erhärtende Kunststoffmaterial sorgt für eine ausreichende Fixierung der Magnete bzw. Magnetpartikel in den Flusssperren. Bei den Magnetpartikeln handelt es sich um permanentmagnetische Partikel.

Nach dem Einspritzen ist zunächst ein Ausrichten der im Kunststoffmaterial enthaltenen Magnetpartikel durch Anlegen eines definierten Magnetfeldes notwendig. Erfindungsgemäß wird hierdurch die gewünschte Anordnung der einzelnen Magnetpartikel erzielt, so dass sich die Flusssperrwirkung in q-Richtung erhöht. Das Ausrichten der magnetischen Bestandteile des Kunststoffmaterials erfolgt sinnvoller Weise im flüssigen bzw. erstarrenden Zustand des Kunststoffmaterials.

Idealerweise wird in alle Flusssperren des Rotors eingespritzt, alternativ nur in ein Teil der Flusssperren pro ausgeprägten Rotorpol. Ferner ist es vorstellbar, dass gewisse Teilbereiche einer Flusssperre leer bleiben oder mit einem anderen Material gefüllt werden. Möglich und sinnvoll kann jedoch auch sein, dass die wenigstens eine Flusssperre vollständig mit dem Magnetpartikel aufweisenden Kunststoffmaterial ausgefüllt wird.

Als Magnetpartikel für das Kunststoffmaterial ist beispielsweise Ferrit und/oder eine Legierung aus Neodym, Eisen und Bor (NdFeB) und/oder eine Legierung aus Samarium (Sm) mit dem Metall Cobalt (Co) vorstellbar.

Das Einspritzen des Kunststoffmaterials in die einzelnen Flusssperren erfolgt optimaler Weise in einer Spritzgussmaschine, die das Rotorpaket nach dem Stapeln der einzelnen Blechschnitte aufnimmt. Dabei kann das Rotorpaket beispielsweise lose zusammengesetzt sein und in diesem Zustand an die Spritzgussmaschine weitergereicht werden. Alternativ kann das Blechpaket vorab axial fixiert werden, bspw. durch Aufbringen auf die Rotorwelle oder Fixierung mittels Endscheiben, die an den axialen Stirnseiten des Paketes angebracht werden.

Das Befüllen der einzelnen Flusssperren erfolgt mittels Spritzguss, wobei ein Kunststoffmaterial mit entsprechenden Magnetpartikeln in die Flusssperren eingebracht wird.

Die Vorteile eines Spritzgussverfahrens liegen jedoch darin, dass das Kunststoffmaterial bzw. das darin enthaltene Magnetmaterial optimal innerhalb der Flusssperren verteilbar ist, um eine vollständige Ausfüllung der Flusssperre zu gewährleisten. Dies vereinfacht ebenfalls den nachfolgenden Ausrichtungsvorgang der Magnetpartikel. Darüber hinaus ist dieser Herstellungsprozess deutlich einfacher als der bisher aus dem Stand der Technik bekannte Herstellungsprozess zur Einbringung von gesinterten Magneten. Insbesondere wird hierzu kein extra Rotorschnitt benötigt, sondern das Anbringen der Permanentmagnete mittels Spritzguss kann für jede denkbare Art von Blechschnittgeometrie erfolgen.

Das vorherige Stapeln der Bleche kann beispielsweise mittels einer Hilfsvorrichtung erfolgen, das fertig gestapelte Blechpaket wird sodann in die Kunststoffspritzgussmaschine eingebracht. Wir bereits zuvor kurz angesprochen wurde, kann das Blechpaket nach dem Stapeln in Axialrichtung mittels Endscheiben fixiert bzw. gespannt werden. In diesem Fall wird das Blechpaket mit den Endscheiben in die Kunststoffspritzgussmaschine eingebracht. Sinnvoll ist selbstverständlich die Anbringung von mindestens zwei axialen Endscheiben, d.h. pro Rotorstirnseite eine. Grundsätzlich ist jedoch auch die Verwendung einer einzelnen axialen Endscheibe denkbar.

Gemäß einer bevorzugten Ausgestaltung der Erfindung werden die verwendeten Endscheiben vor oder nach der Befestigung am Rotorpaket mit ein oder mehreren Einspritzkanälen versehen, die in Axialrichtung des Rotors die Endscheibe durchdringen und dadurch einen Einspritzkanal von außen in die dahinterliegende Flusssperre des Rotorpaketes bilden.

Vorzugsweise ist pro zu füllender Flusssperre wenigstens ein Einspritzkanal in der Endscheibe vorgesehen. Denkbar ist es beispielsweise, dass mehrere Einspritzkanäle in Radialrichtung auf einer gemeinsamen Achse liegen, idealerweise liegen diese im Abstand der Flusssperren versetzt zueinander auf der q- Achse.

Als vorteilhaft erweist sich zudem eine Verengung des wenigstens einen Einspritzkanals in Einspritzrichtung. Besonders bevorzugt ist eine kegelförmige Ausformung wenigstens eines Einspritzkanals, insbesondere läuft der Einspritzkanal in Einspritzrichtung spitz zusammen. Durch die Verengung bzw. Kegelform lässt sich ein Verspannen des Blechpaketes im Rahmen des Ausspritzvorgangs erzielen. Das eingespritzte Material wirkt folglich ähnlich wie eine in Axialrichtung das Paket durchdringende Schraube bzw. Senkkopfschraube, wodurch eine bessere axiale Fixierung des gestapelten Blechpaketes erzielt werden kann. Vorstellbar ist es, dass das Verspannen des Blechpaketes durch die Einbringung eines zum Kunststoffmaterial abweichenden Materials erfolgt.

Zur Fixierung der Deckscheiben ist es vorstellbar, wenn wenigstens ein Einspritzkanal gleichzeitig einen Befestigungspunkt der Endscheibe am Blechpaket ausbildet bzw. ein entsprechender Befestigungspunkt in unmittelbarer Umgebung des Einspritzkanals vorgesehen ist. Die Endscheibe kann alternativ oder zusätzlich durch weitere Haltepunkte mit dem Rotorpaket verbindbar sein, insbesondere mittels mehrerer um die Wellenbohrung verteilt angeordneter Haltepunkte.

Wie bereits vorstehend angedeutet wurde, lassen sich einzelne Flusssperren auch nur teilweise mit dem Magnetpartikel enthaltenden Kunststoffmaterial ausspritzen, was spezielle Modifikationen des Rotors ermöglicht. Denkbar ist beispielsweise ein partielles Einspritzen in ein oder mehrere Flusssperren, so dass idealerweise zumindest eines der radial außen liegenden Enden der Flusssperre frei bleibt. Besonders bevorzugt bleiben beide radial außenliegende Enden der Flusssperre leer. Gilt dies für alle oder zumindest einen Großteil der Flusssperren, so bildet sich ein äußerer Ringbereich des Rotors, dessen darin liegende Flusssperrenbereiche nicht mit dem Magnetpartikel enthaltenden Material ausgespritzt sind. Wird der freibleibende Flusssperrenbereich des äußeren Ringbereichs mit einem elektrisch leitenden, jedoch nicht magnetischen Material ausgefüllt, lässt sich auf diese Weise ein Anlaufkäfig für den Rotor nachbilden, da die Füllung der Flusssperrenbereiche im äußeren Ringbereich mit elektrisch leitenden, jedoch nicht magnetischen Material in Axialrichtung verlaufende Leitelemente ausbildet. Durch diese vorteilhafte Ausgestaltung lässt sich der Rotor auch als Line-Start-Synchronreluktanzmotor betreiben.

Vorstellbar ist die Füllung der Flusssperrenbereiche im äußeren Ringbereich per Aludruckguss. Das Ausfüllen des äußeren Bereichs der Flusssperren kann entweder vor dem Einbringen des Kunststoffmaterials erfolgen oder alternativ nach dem Einbringen des Kunststoffmaterials.

Neben dem erfindungsgemäßen Verfahren betrifft die vorliegende Erfindung ebenfalls einen Rotor für eine Synchronreluktanzmaschine, der aus einzelnen Blechschnitten zu einem Blechpaket gestapelt ist. Einzelne Blechschnitte weisen ein oder mehrere Aussparungen zur Ausbildung von Flusssperren auf. Erfindungsgemäß sind einzelne Flusssperren des Blechpaketes mit einem Magnetpartikel enthaltenen Kunststoffmaterial per Spritzguss befüllt. Die Magnetpartikel sind dabei derart ausgerichtet, dass die Permeabilität in q-Richtung gegenüber nicht ausgefüllten Flusssperren reduziert ist. Erfindungsgemäß ist der Rotor gemäß dem erfindungsgemäßen Verfahren der vorliegenden Erfindung hergestellt.

Daneben betrifft die Erfindung ebenfalls eine Synchronreluktanzmaschine mit dem erfindungsgemäßen Rotor. Die Vorteile und Eigenschaften des Rotors bzw. der Synchronreluktanzmaschine ergeben sich demnach aus der vorangegangenen Beschreibung des erfindungsgemäßen Verfahrens. Auf eine wiederholende Beschreibung wird aus diesem Grund verzichtet.

Weitere Vorteile und Eigenschaften der Erfindung sollen im Folgenden anhand eines in den Figuren dargestellten Ausführungsbeispiels näher erläutert werden. Es zeigen:
Fig. 1: eine Draufsicht auf eine schematische Darstellung eines Blechschnittes des erfindungsgemäßen Rotors mit gefüllten Flusssperren,
Fig. 2: eine Seitenansicht des erfindungsgemäßen Rotorpaketes mit endseitig angeordneten Endscheiben und
Fig. 3: eine Draufsicht auf die axial angebrachte Endscheibe mit dahinter liegendem Rotorpaket.

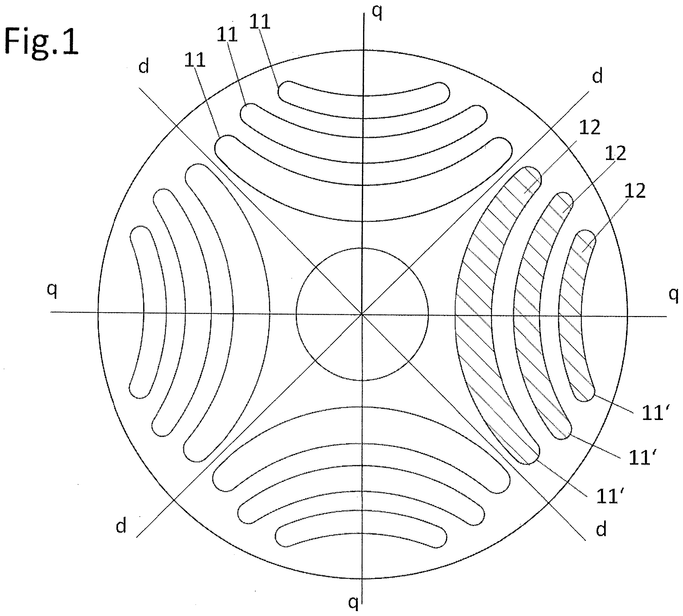

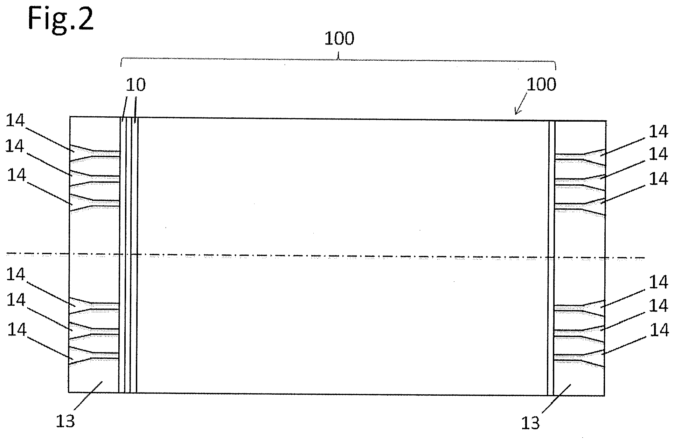

Fig. 1 zeigt einen Blechschnitt 10 des erfindungsgemäßen Rotorpaketes aus einem elektromagnetischen Blech mit einer an sich bekannten Ausformung der Flusssperren 11. Die gewählte Rotorgeometrie sieht insgesamt drei bananenförmige Flusssperren pro ausgeprägtem Pol vor. Die Flusssperren werden zunächst durch Aussparungen im elektromagnetischen Blechmaterial gebildet. Das Rotorpaket 100 wird dann durch axiales Stapeln einer Vielzahl an Blechschnitten 10 gebildet. Eine Seitenansicht des Paketes 100 ist der Figur 2 zu entnehmen.

Gemäß dem erfindungsgemäßen Verfahren werden die Aussparungen 11 nach dem Stapeln des Paketes 100 per Kunststoffspritzguss in einer Spritzgussmaschine mit einem Kunststoffmaterial 12 ausgefüllt. Das verwendete Kunststoffmaterial umfasst dabei eine Vielzahl von Magnetpartikeln, die folglich zusammen mit dem Kunststoff in die Flusssperren 11 eingespritzt werden. Die bereits ausgespritzten Flusssperren sind in Figur 1 mit dem Bezugszeichen 11' gekennzeichnet. Nach dem Einspritzen des Kunststoffmaterials in die Flusssperren 11 werden die darin enthaltenen Magnetpartikel durch Anlegen eines äußeren Magnetfeldes so ausgerichtet, dass diese die Permeabilität des Rotors in q-Richtung soweit wie möglich reduzieren und folglich das Verhältnis zwischen d- und q-Achse optimieren.

Fig. 2 zeigt eine Seitenansicht des erfindungsgemäßen Rotorpakets 100, wobei an den Stirnseiten des Blechpaketes 100 ergänzend Endscheiben 13 zur axialen Fixierung des Blechpaketes 100 vorgesehen sind. Die Endscheiben 13 weisen einzelne Einspritzkanäle 14 auf, die die Endscheiben 13 in Axialrichtung durchdringen und folglich einen Einlasskanal in die dahinterliegenden Flusssperren 11 des Rotorpaktes 100 bilden.

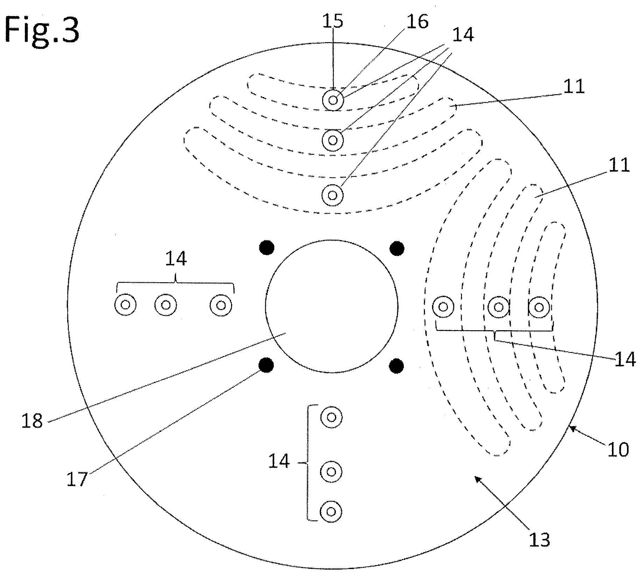

Die Einspritzkanäle sind dabei kegelförmig ausgestaltet, deren breite Trichteröffnung 15 von außen zugänglich ist. Die schmale Öffnung 16 mündet in der unmittelbar dahinter liegenden Flusssperre 11 (s. Figur 3). Fig. 3 zeigt eine Draufsicht auf die Endscheibe 13, wobei in gestrichelter Darstellung das dahinter liegende Blechpaket 100 bzw. der unmittelbar anliegende Blechschnitt 10 angedeutet ist. Erkennbar sind hier die jeweils drei Einspritzkanäle 14 pro Rotorpol, die auf einer Achse in Radialrichtung zueinander versetzt liegen. Im Ausführungsbeispiel der Fig. 3 liegen die Einspritzkanäle 14 dabei versetzt zueinander auf der q-Achse jedes Rotorpols. Durch diese Einspritzkanäle 14 lässt sich das Kunststoffmaterial in die dahinter befindliche Blechschnittgeometrie einspritzen. Durch die kegelförmige Ausgestaltung kann zusätzlich ein Verspannen des Blechpaketes 100 erzielt werden.

Diese einzelnen Einspritzkanäle 14 können zudem zusätzliche Haltepunkte zur Fixierung der Endscheibe 13 am Rotorpaket bilden. Weitere Haltepunkte 17 können verteilt um die Wellenbohrung 18 vorgesehen sein.

In einem weiteren, nicht dargestellten Ausführungsbeispiel könnten die Flusssperren 11 jeweils nur teilweise mit dem Kunststoffmaterial 12 ausgespritzt sein, so dass für jede Flusssperre 11 die radial außenliegenden Endbereiche leer bleiben. Dadurch ergibt sich ein äußerer Ringbereich mit den leer bleibenden Flusssperrenteilbereichen, d.h. das magnetische Kunststoffmaterial wird direkt nur in die inneren Bereiche der Flusssperren 11 eingespritzt. Der äußere Ringbereich bleibt leer bzw. wird zusätzlich mit Aludruckguss gefüllt. Aufgrund der elektrischen Leitfähigkeit des Aluminiums kann im äußeren Ringbereich ein Anlaufkäfig nachgebildet werden, so dass sich ein derartiger Rotor als Line-Start-Synchronreluktanzmotor betreiben lässt. Das Füllen des äußeren Bereichs kann auch zeitlich vor dem Einspritzen des magnetischen Kunststoffmaterials erfolgen.

## Patentansprüche

1. Verfahren zur Herstellung eines Rotors für eine Synchronreluktanzmaschine, mit den Verfahrensschritten:
a. Stapeln eines Rotorpakets (100) als Blechpaket (100) aus einer Vielzahl an Blechschnitten (10), die als d-Achse bezeichnete Flussleitabschnitte und als q-Achse bezeichnete Flusssperrabschnitte umfassen, wobei die Blechschnitte (10) jeweils mit Aussparungen in Richtung der q-Achse zur Ausbildung von Flusssperren (11) des Blechpaketes (100) ausgebildet sind,
b. Befüllen der einzelnen Flusssperren (11) des Blechpaketes (100) mit einem permanentmagnetische Partikel enthaltenen Kunststoffmaterial (12) per Spritzguss,
c. Ausrichten der enthaltenen permanentmagnetischen Partikel durch Anlegen eines äußeren Magnetfeldes, so dass sich die magnetische Permeabilität in q-Richtung des Rotors gegenüber nicht ausgefüllten Flusssperren (11) des Blechpaketes (100) reduziert

2. Verfahren nach Anspruch 1, **dadurch gekennzeichnet, dass** das Kunststoffmaterial (12) als permanentmagnetische Partikel Ferrit und/oder eine Legierung aus Neodym, Eisen und Bor (NdFeB) und/oder eine Legierung aus Samarium (Sm) mit dem Metall Cobalt (Co) enthält.

3. Verfahren nach einem der vorhergehenden Ansprüche, **dadurch gekennzeichnet, dass** das Blechpaket (100) mit ein oder mehreren axialen Endscheiben (13) versehen wird, in diese wenigstens ein axial verlaufender Einspritzkanal (14) eingebracht wird, um das Kunststoffmaterial (12) durch die Endscheibe (13) hindurch in wenigstens eine der dahinterliegenden Flusssperren (11) des Blechpaketes (100) einzuspritzen

4. Verfahren nach Anspruch 3, **dadurch gekennzeichnet, dass** sich der wenigstens eine Einspritzkanal (14) in Einspritzrichtung verengt, um ein Verspannen des Blechpaketes (100) durch das Einspritzen zu erzielen, besonders bevorzugt ist der wenigstens eine Einspritzkanal (14) kegelförmig und läuft in Einspritzrichtung spitz zusammen.

5. Verfahren nach Anspruch 4, **dadurch gekennzeichnet, dass** zum Verspannen des Blechpaketes (100) ein zum Kunststoffmaterial (12) abweichendes Material eingesetzt wird.

6. Verfahren nach einem der vorhergehenden Ansprüche 4 bis 6, **dadurch gekennzeichnet, dass** mehrere Einspritzkanäle (14), vorzugsweise pro Rotorpol, in Radialrichtung des Rotors auf einer Achse liegend in die wenigstens eine Endscheibe (13) eingebracht werden.

7. Verfahren nach einem der vorhergehenden Ansprüche 4 bis 7, **dadurch gekennzeichnet, dass** wenigstens ein Einspritzkanal (14) einen Befestigungspunkt der Endscheibe (13) am Blechpaket (100) ausbildet, wobei optional zusätzliche Haltepunkte vorgesehen sind.

8. Verfahren nach einem der vorhergehenden Ansprüche, **dadurch gekennzeichnet, dass** wenigstens eine der Flusssperren (11) des Blechpaketes (100) nur teilweise mit dem permanentmagnetische Partikel enthaltenen Kunststoffmaterial (12) befüllt wird, insbesondere derart, dass zumindest ein in Radialrichtung des Rotors außenliegender Endbereich der Flusssperre (11) des Blechpaketes (100) leer bleibt oder stattdessen mit einem elektrisch leitenden, jedoch nicht magnetischen Material ausgefüllt werden kann.

9. Verfahren nach Anspruch 8 **dadurch gekennzeichnet, dass** der in Radialrichtung des Rotors außenliegende Endbereich der Flusssperre (11) des Blechpaketes (100) mit Aludruckguss gefüllt wird wobei das Füllen des radial äußeren Endbereichs der Flusssperre (11) des Blechpaketes (100) vor oder nach dem Befüllen der Flusssperre (11) des Blechpaketes (100) mit dem permanentmagnetische Partikel enthaltenden Kunststoffmaterial (12) erfolgt.

10. Rotor für eine Synchronreluktanzmaschine hergestellt nach einem Verfahren der Ansprüche 1 bis 9, umfassend ein Blechpaket (100) mit Aussparungen in Richtung der q-Achse zur Ausbildung von Flusssperren (11) des Blechpaketes (100) innerhalb der Rotorgeometrie wobei einzelne Flusssperren (11) des Blechpaketes (100) mit einem permanentmagnetische Partikel enthaltenen Kunststoffmaterial (12) gefüllt sind.

11. Synchronreluktanzmaschine mit einem Rotor gemäß Anspruch 10.

## Claims

1. Method for producing a rotor for a synchronous reluctance machine, with the method steps of:
a. stacking a rotor core (100) as a laminated core (100) made up of multiple laminations (10), which comprise flux-directing portions referred to as the d axis and flux-directing portions referred to as the q axis, the laminations (10) each being formed with cutouts in the direction of the q axis to form flux barriers (11) of the laminated core (100),
b. filling the individual flux barriers (11) of the laminated core (100) with a plastics material (12) containing permanently magnetic particles, by injection moulding,
c. aligning the contained permanently magnetic particles by applying an external magnetic field such that the magnetic permeability in the q direction of the rotor is reduced as compared with non-filled flux barriers (11) of the laminated core (100).

2. Method according to Claim 1, **characterized in that** the plastics material (12) contains as permanently magnetic particles ferrite and/or an alloy of neodymium, iron and boron (NdFeB) and/or an alloy of samarium (Sm) with the metal cobalt (Co).

3. Method according to one of the preceding claims, **characterized in that** the laminated core (100) is provided with one or more axial end plates (13), into which at least one axially running injection channel (14) is introduced in order to inject the plastics material (12) through the end plate (13) into at least one of the flux barriers (11) of the laminated core (100) that are lying behind it.

4. Method according to Claim 3, **characterized in that** the at least one injection channel (14) narrows in the direction of injection in order to achieve bracing of the laminated core (100) by the injection, particularly preferably the at least one injection channel (14) is conical and converges to a point in the direction of injection.

5. Method according to Claim 4, **characterized in that** a material different from the plastics material (12) is used for the bracing of the laminated core (100).

6. Method according to one of the preceding Claims 4 to 6, **characterized in that** a number of injection channels (14), preferably per rotor pole, are introduced into the at least one end plate (13), lying on an axis in the radial direction of the rotor.

7. Method according to one of the preceding Claims 4 to 7, **characterized in that** at least one injection channel (14) forms a fastening point of the end plate (13) on the laminated core (100), additional holding points optionally being provided.

8. Method according to one of the preceding claims, **characterized in that** at least one of the flux barriers (11) of the laminated core (100) is only partially filled with the plastics material (12) containing permanently magnetic particles, in particular in such a way that at least one end region of the flux barrier (11) of the laminated core (100) lying on the outside in the radial direction of the rotor remains empty or instead may be filled with an electrically conducting, but non-magnetic material.

9. Method according to Claim 8, **characterized in that** the end region of the flux barrier (11) of the laminated core (100) lying on the outside in the radial direction of the rotor is filled with diecast aluminium, the filling of the radially outer end region of the flux barrier (11) of the laminated core (100) taking place before or after the filling of the flux barrier (11) of the laminated core (100) with the plastics material (12) containing permanently magnetic particles.

10. Rotor for a synchronous reluctance machine produced by a method of Claims 1 to 9, comprising a laminated core (100) with cutouts in the direction of the q axis to form flux barriers (11) of the laminated core (100) within the rotor geometry, individual flux barriers (11) of the laminated core (100) being filled with a plastics material (12) containing permanently magnetic particles.

11. Synchronous reluctance machine with a rotor according to Claim 10.

## Revendications

1. Procédé de fabrication d'un rotor destiné à une machine à réluctance synchrone, ledit procédé comprenant les étapes suivantes :
a. empiler un noyau de rotor (100) sous la forme d'un noyau feuilleté en tôle (100) formé d'un grand nombre de flans de tôle (10) qui comprennent des portions de guidage de flux appelées axe d et des portions de blocage de flux appelées axe q, les flans de tôle (10) étant chacun conçus avec des évidements dans la direction de l'axe q destinés à former des barrières anti-flux (11) du noyau feuilleté en tôle (100),
b. remplir les barrières anti-flux individuelles (11) du noyau feuilleté en tôle (100) avec une matière synthétique (12) contenant des particules magnétiques permanentes par moulage par injection,
c. orienter les particules magnétiques permanentes contenues par application d'un champ magnétique extérieur de sorte que la perméabilité magnétique dans la direction q du rotor soit réduite par rapport aux barrières anti-flux non remplies (11) du noyau feuilleté en tôle (100).

2. Procédé selon la revendication 1, **caractérisé en ce que** la matière synthétique (12) contient comme particules magnétiques permanentes de la ferrite et/ou un alliage de néodyme, de fer et de bore (NdFeB) et/ou un alliage de samarium (Sm) avec le métal cobalt (Co).

3. Procédé selon l'une des revendications précédentes, **caractérisé en ce que** le noyau feuilleté en tôle (100) est pourvu d'un ou plusieurs disques d'extrémité axiaux (13), dans lesquels est ménagé au moins un conduit d'injection (14) s'étendant axialement afin d'injecter la matière synthétique (12) à travers la plaque d'extrémité (13) jusque dans au moins une des barrières anti-flux (11) du noyau feuilleté en tôle (100) qui est située derrière ladite plaque d'extrémité.

4. Procédé selon la revendication 3, **caractérisé en ce que** l'au moins un conduit d'injection (14) se rétrécit dans la direction d'injection afin d'obtenir un renforcement du noyau feuilleté en tôle (100) par l'injection, de manière particulièrement préférée l'au moins un conduit d'injection (14) est conique et s'étend en pointe dans la direction d'injection.

5. Procédé selon la revendication 4, **caractérisé en ce qu'**une matière différente de la matière synthétique (12) est utilisée pour renforcer le noyau feuilleté en tôle (100).

6. Procédé selon l'une des revendications précédentes 4 à 6, **caractérisé en ce que** plusieurs conduits d'injection (14), de préférence par pôle de rotor, sont ménagés dans l'au moins une plaque d'extrémité (13) en étant situés sur un axe dans la direction radiale du rotor.

7. Procédé selon l'une des revendications précédentes 4 à 7, **caractérisé en ce qu'**au moins un conduit d'injection (14) forme un point de fixation de la plaque d'extrémité (13) sur le noyau feuilleté en tôle (100), des points de retenue supplémentaires étant éventuellement prévus.

8. Procédé selon l'une des revendications précédentes, **caractérisé en ce qu'**au moins une des barrières anti-flux (11) du noyau feuilleté en tôle (100) est remplie avec la matière synthétique (12) qui contient des particules magnétiques permanentes, en particulier de manière à ce qu'au moins une zone d'extrémité de la barrière anti-flux (11) du noyau feuilleté en tôle (100), laquelle zone est située à l'extérieur dans la direction radiale du rotor, reste vide ou, à la place, puisse être remplie d'une matière électriquement conductrice mais non magnétique.

9. Procédé selon la revendication 8, **caractérisé en ce que** la zone d'extrémité de la barrière anti-flux (11) du noyau feuilleté en tôle (100), laquelle zone est située à l'extérieur dans la direction radiale du rotor, est remplie d'aluminium moulé sous pression, le remplissage de la zone d'extrémité radialement extérieure de la barrière anti-flux (11) du noyau feuilleté en tôle (100) étant effectué avant ou après le remplissage de la barrière anti-flux (11) du noyau feuilleté en tôle (100) avec la matière synthétique (12) qui contient des particules magnétiques permanentes.

10. Rotor destiné à une machine à réluctance synchrone et fabriqué selon un procédé des revendications 1 à 9, ledit rotor comprenant un noyau feuilleté en tôle (100) pourvu d'évidements dans la direction de l'axe q afin de former des barrières anti-flux (11) du noyau feuilleté en tôle (100) dans la géométrie du rotor, les barrières anti-flux individuelles (11) du noyau feuilleté en tôle (100) étant remplies d'une matière synthétique (12) qui contient des particules magnétiques permanentes.

11. Machine à réluctance synchrone comprenant un rotor selon la revendication 10.
